# EUROPÄISCHE PATENTSCHRIFT

(11) **EP 1 419 375 B1**
(45) Veröffentlichungstag und Bekanntmachung des Hinweises auf die Patenterteilung: **26.01.2011**
(21) Anmeldenummer: 02794734.0
(22) Anmeldetag: 25.07.2002
(51) Int. Cl.: G01N 21/90

(54) **VERFAHREN UND VORRICHTUNG ZUR INSPEKTION GEFÜLLTER UND VERSCHLOSSENER FLASCHEN, INSBESONDERE IM BODENNAHEN SEITENWANDBEREICH**
METHOD AND DEVICE FOR INSPECTING FILLED, CLOSED BOTTLES, IN PARTICULAR IN THE LATERAL WALL AREA NEAR THE BASE
PROCEDE ET DISPOSITIF DE CONTROLE DE BOUTEILLES FERMEES ET REMPLIES, EN PARTICULIER DANS LA ZONE DE LA PAROI LATERALE DESDITES BOUTEILLES SITUEE A PROXIMITE DU FOND

(30) Priorität: 16.08.2001 DE 10140010
(43) Veröffentlichungstag der Anmeldung: 19.05.2004
(73) Patentinhaber: Krones AG, 93068 Neutraubling (DE)
(72) Erfinder: KWIRANDT, Rainer, 93083 Obertraubling (DE)
(74) Vertreter: Grünecker, Kinkeldey, Stockmair & Schwanhäusser Anwaltssozietät
(86) Internationale Anmeldenummer: PCT/EP2002/008281
(87) Internationale Veröffentlichungsnummer: WO 2003/016885

(56) Entgegenhaltungen:
- WO-A-00/77499
- DE-A- 2 617 457
- DE-A- 19 538 013
- DE-A- 19 834 526
- DE-A- 19 904 732
- DE-C- 10 017 126
- US-A- 4 209 802

## Beschreibung

Die Erfindung betrifft ein Verfahren und eine Vorrichtung zum Inspizieren gefüllter und verschlossener Flaschen.

Es ist bekannt, transparente Flaschen für Getränke oder dgl. Nach dem Füllen und Verschließen zu inspizieren um Schwebstoffe oder am Boden liegende Fremdkörper zu erkennen. Im Füllgut schwebende Partikel können mit Hilfe einer die Flasche beispielsweise seitlich betrachtenden Kamera ermittelt werden, während der Inhalt der Flasche vom Boden oder der Seite her beleuchtet wird, wobei ggf. das Füllgut vor einem dunklen Hintergrund betrachtet wird.

Aus der WO 00/77489 A1 ist ein Verfahren zur Inspektion einer durchsichtigen Verpackung und eine Vorrichtung und ein System zur Verwendung dafür bekannt.

Aus der DE 199 04 732 A1 ist eine Behälterprüfmaschine bekannt. Aus der DE 26 17 457 ist ein Verfahren zum Erzeugen eines Sichtbildes eines zu prüfenden Gegenstandes mittels Durhstrahlung sowie eine optische Prüfvorrichtung bekannt. Aus der US 4,492,475 ist ein Verfahren zum Detektieren von Fremdmaterie die in eine Flüssigkeit eingemischt ist, die in einem Transparenten Behälter enthalten ist sowie eine dafür relevante Vorrichtung bekannt.

Um am Boden liegende Fremdkörper zu ermitteln, ist es beispielsweise aus der US 4,209,802 bekannt, eine Transportvorrichtung einzusetzen, die die gefüllten und verschlossenen transparenten Flaschen aus ihrer Vertikallage in eine geneigte Position überführt, damit die evtl. in einer Flasche vorhandenen Fremdkörper zu deren tiefsten Stelle im Übergangsbereich vom Boden zur Seitenwand rutschen. Dieser Bereich wird gezielt beleuchtet und von einer Kamera aufgenommen. Nachteilig an dieser Lösung ist der hohe mechanische Aufwand, der zum Kippen der Flaschen erforderlich ist, insbesondere wenn eine derartige Inspektionsvorrichtung für in der Getränkeindustrie übliche Produktionsleistungen geeignet sein soll. Aufgrund der erforderlichen Kippstrecken weisen diese Konstruktionen nachteiligerweise eine erhebliche Baulänge auf.

Der Erfindung liegt daher die Aufgabe zu Grunde, ein verfahren und eine Vorrichtung zur Inspektion des unteren Seitenwandbereichs (Seitenboden) von gefüllten und verschlossenen transparenten Flaschen anzugeben, das/die für eine zuverlässige Erkennung von am Bodenrandbereich liegenden Fremdstoffen mit geringem Aufwand aber hoher Erkennungssicherheit geeignet ist.

Diese Aufgabe wird durch ein Verfahren nach Auspruch 1 und eine Vorrichtung nach Anspruch 8 gelöst. Die Neigung des Strahlengangs bezüglich der Horizontalen weist bei gängigen Flaschen bevorzugt einen Winkel im Bereich von 10° bis 12° auf.

Die Optik ist vorzugsweise so ausgebildet, daas zwei sich unter einem bestimmten winkel kreuzende bzw. schneidende Strahlengänge wenigstens zwei Ansichten des unteren Flaschenseitenwandbereichs (Seitenboden) aus unterschiedlichen Umfangsrichtungen liefern, die auf eine einzige Kamera projiziert werden und dort eine der Anzahl der Strahlengänge entsprechende Zahl von Abbildungen, vorzugsweise nebeneinander, auf dem flächigen CCD-Chip der Kamera erzeugen.

Bevorzugt schneiden sich die Strahlengänge unter einem eingeschlossenen Winkel von 45°.

Gemäß der Erfindung ist vorgesehen, die kontinuierlich mit Zwischenabständen in einspuriger Reihe entlang einer Förderbahn bewegten Flaschen von zwei gegenüberliegenden Seiten der Förderbahn jeweils durch eine Optik der zuvor genannten Art zu betrachten.

Um eine lückenlose, voll umfängliche Erfassung des unteren Flaschenseitenwandbereichs (Seitenboden) sicherzustellen, ist es von Vorteil, die Flaschen ggf. um 90° zu drehen und anschließend wiederum von zwei gegenüberliegenden Seiten mit der zuvor genannten optik auf jeweils eine Kamera abzubilden.

Vorrichtungsseitig können die für eine Inspektionsstation (Kamera) vorzusehenden optischen Mittel zur Erzeugung der sich kreuzenden Strahlengänge einfache Spiegel mit ebenen Spiegelflächen sein, die bezüglich der Förderebene und der Förderrichtung der Flaschen so im Raum geneigt angeordnet sind, dass wenigstens zwei parallele Abbildungen des unteren Seitenwandbereichs einer Flasche auf dem CCD-Chip einer Kamera bei voller Ausnutzung der zur Verfügung stehenden Fläche und Auflösung erzeugt werden.

Weitere vorteilhafte Ausgestaltungen der Erfindung sind Gegenstand der verbleibenden Unteransprüche.

Nachfolgend wird ein bevorzugtes Ausführungsbeispiel der Erfindung anhand er Figuren erläutert. Es zeigt:
- Figur 1: eine Draufsicht eines zur besseren Erläuterung der Erfindung dargestellten Beispiels einer Inspektionsmaschine in schematischer Darstellung,
- Figur 2: ein vertikalschnitt durch die Inspektionsmaschine gemäß einer Ausführungsform der Erfindung in Förderrichtung betrachtet und
- Figur 3: eine Seitenansicht der Vorrichtung nach Fig.2 aus der Kameraperspektive quer zur Förderrichtung betrachtet.

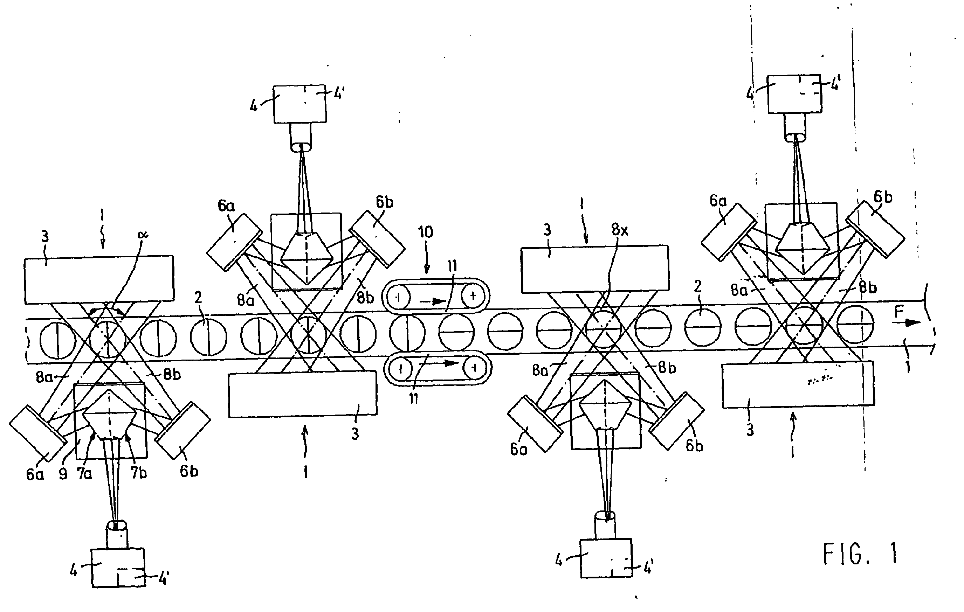

In Figur 1 ist ein in Förderrichtung F kontinuierlich antreibbares Förderband 1 gezeigt, auf dem Flaschen 2 in einer einspurigen Reihe aufrechtstehend durch eine insgesamt vier gleichartig aufgebaute, hintereinander angeordnete Inspektionsstationen I aufweisende Inspektionsmaschine reibschlüssig transportierbar sind.

Eine einzelne Inspektionasstation I besteht im Wesentlichen aus einem längs an einer Seite des Förderbandes 1 angeordneten Leuchtschirm 3, der diffuses Licht abstrahlt, und einer auf der gegenüberliegenden Seite unterhalb des Förderbandes 1 positionierten Kamera 4 (CCD-Kamera) mit integrierter Bildauswertung 4'.

Der Leuchtschirm 3 ist beispielsweise mit gepulsten LEDs bestückt. Im Bereich zwischen der Kamera 4 und dem Förderband 1 bzw. einer zu prüfenden Flasche 2 sind insgesamt vier ebene Spiegel 6a, 6b, 7a, 7b symmetrisch zu der rechtwinkelig zur Förderrichtung F verlaufenden optischen Achse der Kamera 4 so angeordnet, dass zwei gleich lange, sich über dem Förderband 1 kreuzende Strahlengänge 8a, 8b entstehen, durch deren Kreuzungsbereich 8x die Flaschen 2 kontinuierlich hindurchführbar sind. Ferner umfaßt die Spiegelanordnung einen fünften, vor der Kamera 4 geneigt angeordneten Spiegel 9, der beide von der unteren Seitenwand einer Flasche 2 kommenden Strahlengänge zum Objektiv einer Kamera 4 umlenkt und nebeneinander auf deren CCD-Chip projiziert.

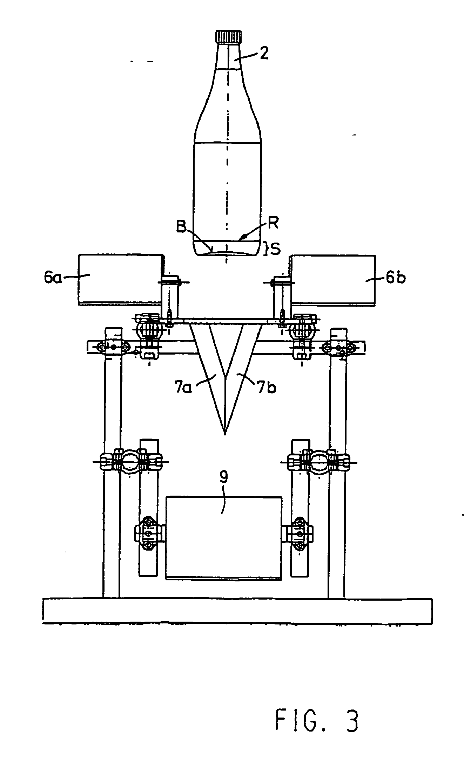

Von der Kamera 4 ausgehend gesehen (Fig.3) besteht die Spiegelanordnung aus dem bereits genannten, für beide Strahlengänge gemeinsamen umlenkspiegel 9 sowie aus einem innenliegenden, dachförmig windschief angeordneten Spiegelpaar 7a, 7b mit zum Spiegel 9 weisenden Spiegelflächen und zwei darüber liegenden, äußeren, zum Leuchtschirm 3 bzw. einer zu untersuchenden Flasche 2 gerichteten Spiegeln 6a, 6b, die seitlich neben dem Förderband 2 etwas unterhalb dessen Förderoberfläche sowohl zur Förderebene als auch Förderrichtung geneigt so angeordnet sind, dass zwei sich über dem Förderband 1 im unteren Bereich der Flaschenseitenwand (Seitenboden) kreuzende Strahlengänge 8a, 8b bilden, deren optischen Achsen in einer senkrechten Projektion betrachtet einen gemeinsamen Winkel α von annähernd 45° einschließen und bezüglich der Förderrichtung F einen Winkel von 67,5° besitzen. Diese beiden Strahlengänge 8a, 8b weisen ferner eine auf die horizontale Förderebene bezogen nach unten gerichtete Neigung β auf, die eine tangential zu der nach innen gewölbten Bodenoberfläche B einer Flasche 2 verlaufende Betrachtung des unteren Seitenwandbereichs S einer Flasche ermöglicht, Bei gewöhnlichen Getränkeflaschen für Bier, Limonaden, Wasser oder dgl. bewegt sich der Winkel β im Bereich zwischen 10 bis 12°. Es versteht sich, dass dieser Winkel im Einzelfall von der jeweiligen Geometrie der Bodenwölbung abhängt.

Im rinnenförmigen Bereich des in die senkrechten Flaschenseitenwände übergehenden Flaschenbodenumfangs liegende Fremdkörper bewirken eine teilweise Abschattung des vom Leuchtschirm 3 kommenden Lichts und sind demzufolge als dunkle Flecken in den auf dem CCD-Chip erzeugten Abbildungen erkennbar. Zur Abbildung derartiger Fremdkörper genügt allein die Erfassung des unteren Bereichs S der Flaschenseitenwand, der sich vom Boden ausgehend in eine Höhe bis zu dem bei Mehrwegflaschen normalerweise vorhandenen unteren Reibring R (Scuffingring) erstreckt. Ein derartiger Scuffingring (umfänglich verlaufende Scheuerfläche) befindet sich gewöhnlich in einer Höhe von 15 bis 20 mm oberhalb des Flaschenbodens.

Entsprechend Fig. 1 sind die einzelnen Inspektionsstationen I so am Förderband 1 angeordnet, dass immer paarweise zwei Inspektionsstationen I eine Flasche 2 mit einer Kamera 4 von gegenüberliegenden Seiten im wesentlichen quer zur Förderrichtung F betrachten, d.h. bei einer Inspektionsstation I befindet sich die Kamera 4 linker Hand und der Leuchtschirm 3 rechter Hand des Förderbands; bei der nächsten Inspektionsstation I ist die Anordnung genau umgekehrt getroffen. In Förderrichtung F ist zwischen den jeweils paarweise zugeordneten Inspektionsstationen I ist ein synchron zum Förderband 1 antreibbares, seitlich an den Flaschen 2 reibschlüssig angreifendes Riemenpaar 10 vorhanden, dessen zueinanderweisenden Trume 11 in Förderrichtung F derart unterschiedliche Fördergeschwindigkeiten aufweisen, dass die Flaschen 2 beim Passieren des Riemenpaares 10 um annähernd 90° gedreht werden, bevor sie die beiden dahinter liegenden Inspektionsstationen I durchfahren. Auf diese Weise kann der untere seitenwandbereich S einer Flasche 2 vollumfänglich lückenlos erfasst und inspiziert werden.

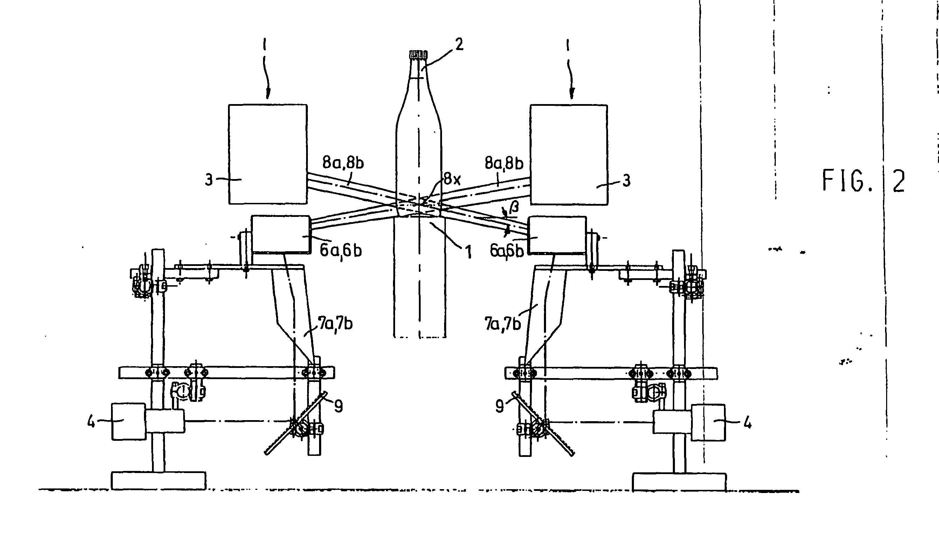

Abweichend von den Beispiel nach Fig. 1 sind jeweils zwei Inspektionsstationen I entsprechend der Darstellung in Fig. 2 ohne einen Versatz in Förderrichtung F unmittelbar diametral gegenüberliegend positioniert, wodurch vorteilhafterweise die Baulänge der gesamten Inspektionsmaschine auf ein Minimum reduzierbar ist. Hier ist jeweils der Leuchtschirm 3 der einen Station I über der Spiegelanordnung 6a-7b und der Kamera 4 der gegenüberliegenden Station I platziert. Die Beleuchtung und Bildaufnahme beider inspektionestationen kann ohne gegenseitige Störung gleichzeitig erfolgen, wenn sich eine Flasche 2 in dem von insgesamt vier sich kreuzenden Strahlengängen 8a, 8b gebildeten Kreuzungsbereich 8x befindet.

Die ebenen Spiegel 6a-7b sind so im Raum -sowohl zur Förderrichtung F als auch zur Förderebene- geneigt ausgerichtet, dass pro Kamera 4 zwei parallele, die zur Verfügung stehende Chipfläche und auch Auflösung maximal ausnützende Abbildungen entstehen. Die Abbildungen des unteren seitenwandbereichs s sind spiegelbildlich mit den Flaschenböden zueinanderweisend ausgerichtet.

## Patentansprüche

1. Verfahren zur Inspektion gefüllter und verschlossener Flaschen (2) mit wenigstens einer Kamera (4), die den bodennahen Seitenwandbereich der Flaschen (2) durch eine Optik (6a-7b, 9) aus wenigstens zwei umfänglich verschiedenen Richtungen seitlich schräg von unten annähernd tangential bzw. parallel zu dieser Tangentialrichtung zur Bodenwölbung im seitenwandnahen Randbereich des Flaschenbodens vor einer Lichtquelle (3) oder einem erhellten Hintergrund betrachtet und wenigstens zwei Abbildungen erzeugt, die einer Bildanalyse und/oder einem Bildvergleich unterzogen werden, wobei bei Erkennen einer unzulässigen Abweichung ein Signal erzeugt wird, wobei die Flaschen auf einem Förderer (1) in einer einspurigen, Zwischenabstände aufweisenden Reihe kontinuierlich transportiert werden, **dadurch gekennzeichnet, dass** die Flaschen (2) durch auf gegenüberliegenden Seiten des Förderers (1) angeordnete Kameras (4) mit zugeordneter Optik (6a-7b, 9) nacheinander oder gleichzeitig inspiziert werden, wobei die auf beiden Seiten des Förderers (1) angeordneten Kameras (4) und/oder deren Optik (6a - 7b, 9) sich jeweils ganz oder teilweise unterhalb der Lichtquelle (3) der gegenüberliegenden Kamera (4) und/oder deren Optik (6a - 7b, 9) befinden.

2. Verfahren nach Anspruch 1, **dadurch gekennzeichnet, dass** die Optik (6a-7b, 9) wenigstens zwei sich in einem Inspektionsbereich kreuzende Strahlengänge (8a, 8b) erzeugt, die Flaschen (2) in einer einspurigen, Zwischenabstände aufweisenden Reihe kontinuierlich durch den Inspektionsbereich transportiert und währenddessen jeweils wenigstens zwei Abbildungen von jeder Flaschenseitenwand aufgenommen werden, vorzugsweise gleichzeitig.

3. Verfahren nach Anspruch 2, **dadurch gekennzeichnet, dass** die Achse der Strahlengänge (8a, 8b) zur Horizontalen eine Neigung im Bereich von 10° bis 12° aufweist.

4. Verfahren nach Anspruch 2 oder 3, **dadurch gekennzeichnet, dass** die Achse der Strahlengänge (8a, 8b) mit der Förderrichtung der Flaschen (2) einen Winkel von annähernd 67,5° einschließt.

5. Verfahren nach einem der Ansprüche 1 bis 4, **dadurch gekennzeichnet, dass** jede Flasche (2) von zwei gegenüberliegenden Seiten des Förderers betrachtet wird.

6. Verfahren nach Anspruch 5, **dadurch gekennzeichnet, dass** jede Flasche (2) zweimal von in Förderrichtung diametral gegenüberliegenden Seiten betrachtet und dazwischen um annähernd 90° gedreht wird.

7. Verfahren nach wenigstens einem der Ansprüche 1 bis 8, **dadurch gekennzeichnet, dass** aus den aufgenommenen Abbildungen das Vorhandensein von Fremdkörpern ermittelt wird.

8. Vorrichtung (I) zur Inspektion gefüllter und verschlossener Flaschen (2) mit einer Kamera (4), die wenigstens den bodennahen Bereich (S) der Seitenwand jeder Flasche durch eine von der Vorrichtung umfassten Optik (6a-7b, 9) seitlich schräg von unten annähernd tangential bzw. parallel zu dieser Tangentialrichtung zur Bodenwölbung (B) aus wenigstens zwei umfänglich verschiedenen Richtungen vor einer von der Vorrichtung umfassten Lichtquelle (3) oder einem erhellten Hintergrund erfassen kann und wenigstens zwei Abbildungen erzeugen kann, die durch eine von der Vorrichtung umfassten Auswerteeinrichtung (4') einer Bildanalyse und/oder einem Bildvergleich unterziehbar sind, wobei bei Erkennen einer unzulässigen Abweichung ein Signal erzeugbar ist,
wobei die Vorrichtung einen Förderer umfasst, wobei die Flaschen (2) auf dem Förderer (1) in einer einspurigen, Zwischenabstände aufweisenden Reihe kontinuierlich transportierbar sind, **dadurch gekennzeichnet, dass** die Flaschen (2) durch auf gegenüberliegenden Seiten des Förderers (1) angeordnete Kameras (4) mit zugeordneter Optik (6a - 7b, 9) nacheinander oder gleichzeitig inspizierbar sind, und
die auf beiden Seiten des Förderers (1) angeordneten Kameras (4) und/oder deren Optik (6a - 7b, 9) sich jeweils ganz oder teilweise unterhalb der Lichtquelle (3) der gegenüberliegenden Kamera (4) und/oder deren Optik (6a - 7b, 9) befinden.

9. Vorrichtung nach Anspruch 8, **dadurch gekennzeichnet, dass** die Optik lichtreflektierende Elemente, in Form ebener Spiegel (6a, 6b), aufweist, die zwischen der Kamera (4) und der Lichtquelle (3) so angeordnet sind, dass zwei zur Horizontalen geneigte, sich unter einem bestimmten Winkel (α) kreuzende Strahlengänge (8a, 8b) entstehen, durch die die aufrechtstehenden Flaschen (2) mittels eines Förderers (1) kontinuierlich hindurchführbar sind.

10. Vorrichtung nach Anspruch 9, **dadurch gekennzeichnet, dass** die Spiegel (6a, 6b) so angeordnet sind, dass der Kreuzungswinkel (α) der Strahlengänge (8a, 8b) annähernd 45° beträgt.

11. Vorrichtung nach Anspruch 9, **dadurch gekennzeichnet, dass** die Spiegel (6a, 6b) so angeordnet sind, dass der Neigungswinkel (β) der Strahlengänge (8a, 8b) zur Horizontalen im Bereich von 10° bis 12° liegt.

12. Vorrichtung nach einem der Ansprüche 9 bis 11, **dadurch gekennzeichnet, dass** die Neigung der Spiegel (6a, 6b) sowohl zur Horizontalebene als auch zur Förderrichtung der Flaschen so einstellbar oder voreingestellt ist, dass die Strahlengänge (8a, 8b) parallel ausgerichtete Abbildungen in der Kamera (4) liefern.

13. Vorrichtung nach Anspruch 12, **dadurch gekennzeichnet, dass** in Förderrichtung (F) hintereinander versetzt auf jeder Seite des Förderers (1) zwei Kameras (4) mit zugeordneter Optik (6a - 7b. 9) angeordnet sind und dazwischen eine Einrichtung (10) zum Drehen der Flaschen (2), insbesondere um annähernd 90°, vorhanden ist.

14. Vorrichtung nach Anspruch 13, **dadurch gekennzeichnet, dass** die Einrichtung zum Drehen der Flaschen (2)
ein mit unterschiedlichen Geschwindigkeiten synchron zum Förderer (1) antreibbares Riemenpaar (10) ist.

## Claims

1. A method of inspecting filled and closed bottles (2) with at least one camera (4) which observes the side wall region of the bottles (2) close to the base by a lens (6a to 7b, 9) from at least two peripherally different directions laterally obliquely from below approximately tangentially or parallel to this tangential direction to the base curvature in the edge region of the bottle base close to the side wall in front of a light source (3) or an illuminated background and which produces at least two images which are subjected to an image analysis and/or an image comparison, wherein a signal is produced when an impermissible deviation is detected, wherein the bottles are continuously conveyed on a conveyor (1) in a single-track row having intervals, **characterized in that** the bottles (2) are inspected in succession or simultaneously by cameras (4) arranged on opposite sides of the conveyor (1) and having an associated lens (6a to 7b, 9), wherein the cameras (4) arranged on both sides of the conveyor (1) and/or the lens (6a to 7b, 9) thereof is or are situated completely or in part below the light source (3) of the opposite camera (4) and/or the lens (6a to 7b, 9) thereof in each case.

2. A method according to claim 1, **characterized in that** the lens (6a to 7b, 9) produces at least two beam paths (8a, 8b) intersecting in an inspection region, the bottles (2) are conveyed continuously through the inspection region in a single-track row having intervals, and during this at least two images from each side wall of the bottles are recorded in each case, preferably simultaneously.

3. A method according to claim 2, **characterized in that** the axis of the beam paths (8a, 8b) has an inclination in the range of from 10° to 12° with respect to the horizontal.

4. A method according to claim 2 or 3, **characterized in that** the axis of the beam paths (8a, 8b) forms an angle of approximately 67.5° with the conveying direction of the bottles (2).

5. A method according to any one of claims 1 to 4, **characterized in that** each bottle (2) is observed from two opposite sides of the conveyor.

6. A method according to claim 5, **characterized in that** each bottle (2) is observed twice from sides diametrically opposite in the conveying direction and are turned between them through approximately 90°.

7. A method according to at least one of claims 1 to 6, **characterized in that** the presence of foreign bodies is determined from the recorded images.

8. An apparatus (I) for inspecting filled and closed bottles (2) with a camera (4) which can detect at least the region (S) of the side wall of each bottle (2) close to the base by a lens (6a to 7b, 9) embraced by the apparatus laterally obliquely from below approximately tangentially or parallel to this tangential direction to the base curvature (B) from at least two peripherally different directions in front of a light source (3) embraced by the apparatus or an illuminated background and which can produce at least two images which are capable of being subjected to an image analysis and/or an image comparison by an evaluation device (4') embraced by the apparatus, wherein a signal is capable of being produced when an impermissible deviation is detected, wherein the apparatus has a conveyor, wherein the bottles (2) are capable of being conveyed on the conveyor (1) continuously in a single-track row having intervals, **characterized in that** the bottles (2) are capable of being inspected in succession or simultaneously by cameras (4) arranged on opposite sides of the conveyor (1) and having an associated lens (6a to 7b, 9), and the cameras (4) arranged on both sides of the conveyor (1) and/or the lens (6a to 7b, 9) thereof is or are situated completely or in part below the light source (3) of the opposite camera (4) and/or the lens (6a to 7b, 9) thereof in each case.

9. An apparatus according to claim 8, **characterized in that** the lens has light-reflecting elements in the form of flat mirrors (6a, 6b) which are arranged between the camera (4) and the light source (3) in such a way that two beam paths (8a, 8b) are formed which are inclined with respect to the horizontal and intersect at a specified angle (α) and through which the upright bottles (2) are capable of being passed continuously by means of a conveyor (1).

10. An apparatus according to claim 9, **characterized in that** the mirrors (6a, 6b) are arranged in such a way that the angle of intersection (α) of the beam paths (8a, 8b) amounts to approximately 45°.

11. An apparatus according to claim 9, **characterized in that** the mirrors (6a, 6b) are arranged in such a way that the angle of inclination (β) of the beam paths (8a, 8b) with respect to the horizontal is in the region of from 10° to 12°.

12. An apparatus according to any one of claims 9 to 11, **characterized in that** the inclination of the mirrors (6a, 6b) both with respect to the horizontal and with respect to the conveying direction of the bottles is capable of being set or is set in advance in such a way that the beam paths (8a, 8b) deliver images orientated parallel in the camera (4).

13. An apparatus according to claim 12, **characterized in that** two cameras (4) with an associated lens (6a to 7b, 9) are arranged offset one behind the other in the conveying direction (F) on each side of the conveyor (1), and a device (10) for rotating the bottles (2), in particular by approximately 90°, is provided between them.

14. An apparatus according to claim 13, **characterized in that** the device for rotating the bottles (2) is a pair of belts (10) capable of being driven at different speeds in synchronism with the conveyor (1).

## Revendications

1. Procédé pour contrôler des bouteilles (2) remplies et fermées, à l'aide d'au moins une caméra (4) qui observe la zone de paroi latérale des bouteilles (2) située près du fond grâce à un système optique (6a-7b, 9) à partir d'au moins deux sens différents sur la circonférence, latéralement en biais de dessous, approximativement tangentiellement ou parallèlement à ce sens tangentiel par rapport à la partie bombée du fond, dans la zone du bord du fond de la bouteille située près de la paroi latérale, devant une source de lumière (3) ou un arrière-plan éclairé, et qui génère au moins deux représentations optiques qui sont soumises à une analyse d'image et/ou à une comparaison d'images, un signal étant généré en cas de détection d'un écart non autorisé, et les bouteilles étant transportées en continu sur un convoyeur (1) sur une rangée à une seule voie et avec des intervalles,
**caractérisé en ce que** les bouteilles (2) sont contrôlées les unes après les autres ou en même temps par des caméras (4) disposées sur des côtés opposés du convoyeur (1) et pourvues d'un système optique associé (6a-7b, 9), les caméras (4) disposées des deux côtés du convoyeur (1) et/ou leur système optique (6a-7b, 9) se trouvant entièrement ou partiellement au-dessous de la source de lumière (3) de la caméra (4) opposée et/ou du système optique (6a-7b, 9) de celle-ci.

2. Procédé selon la revendication 1, **caractérisé en ce que** le système optique (6a-7b, 9) génère au moins deux trajets de faisceaux (8a, 8b) qui se croisent dans une zone de contrôle, et les bouteilles (2) sont transportées en continu à travers la zone de contrôle, sur une rangée à une seule voie et avec des intervalles, et pendant ce temps au moins deux représentations optiques de chaque paroi latérale des bouteilles sont enregistrées, de préférence en même temps.

3. Procédé selon la revendication 2, **caractérisé en ce que** l'axe des trajets de faisceaux (8a, 8b) présente par rapport à l'horizontale une inclinaison située dans la plage de 10° à 12°.

4. Procédé selon la revendication 2 ou 3, **caractérisé en ce que** l'axe des trajets de faisceaux (8a, 8b) définit avec le sens de transport des bouteilles (2) un angle d'environ 67,5°.

5. Procédé selon l'une des revendications 1 à 4, **caractérisé en ce que** chaque bouteille (2) est observée à partir de deux côtés opposés du convoyeur.

6. Procédé selon la revendication 5, **caractérisé en ce que** chaque bouteille (2) est observée deux fois à partir de deux côtés diamétralement opposés, dans le sens de transport, et est tournée d'environ 90° entre les deux fois.

7. Procédé selon l'une au moins des revendications 1 à 6, **caractérisé en ce que** la présence de corps étrangers est déterminée à partir des représentations optiques enregistrées.

8. Dispositif (I) pour contrôler des bouteilles (2) remplies et fermées, à l'aide d'une caméra (4) qui peut capter au moins la zone (S) de la paroi latérale de chaque bouteille (2) qui est située près du fond grâce à un système optique (6a-7b, 9) compris dans le dispositif, latéralement en biais de dessous, approximativement tangentiellement ou parallèlement à ce sens tangentiel par rapport à la partie bombée (B) du fond, à partir d'au moins deux sens différents sur la circonférence, devant une source de lumière (3) comprise dans le dispositif ou devant un arrière-plan éclairé, et qui peut générer au moins deux représentations optiques aptes à être soumises à une analyse d'image et/ou à une comparaison d'images grâce à un appareil d'interprétation (4') compris dans le dispositif, un signal pouvant être généré en cas de détection d'un écart non autorisé,
le dispositif comprenant un convoyeur, les bouteilles (2) étant aptes à être transportées en continu sur le convoyeur (1) sur une rangée à une seule voie et avec des intervalles,
**caractérisé en ce que** les bouteilles (2) sont contrôlées les unes après les autres ou en même temps par des caméras (4) disposées sur des côtés opposés du convoyeur (1) et pourvues d'un système optique associé (6a-7b, 9), et
les caméras (4) disposées des deux côtés du convoyeur (1) et/ou leur système optique (6a-7b, 9) se trouvent entièrement ou partiellement au-dessous de la source de lumière (3) de la caméra (4) opposée et/ou du système optique (6a-7b, 9) de celle-ci.

9. Dispositif selon la revendication 8, **caractérisé en ce que** le système optique comporte des éléments réfléchissant la lumière, sous la forme de miroirs plans (6a, 6b), qui sont disposés entre la caméra (4) et la source de lumière (3) de telle sorte qu'il se forme deux trajets de faisceaux (8a, 8b) qui sont inclinés par rapport à l'horizontale et qui se croisent suivant un angle défini (α), et à travers lesquels les bouteilles (2) placées debout sont aptes à passer en continu à l'aide d'un convoyeur (1).

10. Dispositif selon la revendication 9, **caractérisé en ce que** les miroirs (6a, 6b) sont disposés de telle sorte que l'angle de croisement (α) des trajets de faisceaux (8a, 8b) soit d'environ 45°.

11. Dispositif selon la revendication 9, **caractérisé en ce que** les miroirs (6a, 6b) sont disposés de telle sorte que l'angle d'inclinaison (β) des trajets de faisceaux (8a, 8b) par rapport à l'horizontale soit situé dans la plage de 10° à 12°.

12. Dispositif selon l'une des revendications 9 à 11, **caractérisé en ce que** l'inclinaison des miroirs (6a, 6b) à la fois par rapport au plan horizontal et au sens de transport des bouteilles est réglable ou préréglé de telle sorte que les trajets de faisceaux (8a, 8b) fournissent dans la caméra (4) des représentations optiques orientées parallèlement.

13. Dispositif selon la revendication 12, **caractérisé en ce qu'**il est prévu, décalées l'une derrière l'autre dans le sens de transport (F), de chaque côté du convoyeur (1), deux caméras (4) avec un système optique associé (6a-7b, 9), et entre les deux est prévu un dispositif (10) pour tourner les bouteilles (2), en particulier d'environ 90°.

14. Dispositif selon la revendication 13, **caractérisé en ce que** le dispositif pour tourner les bouteilles (2) est constitué par une paire de courroies (10) apte à être entraînée à des vitesses différentes, de manière synchrone par rapport au convoyeur (1).
